# EUROPÄISCHE PATENTSCHRIFT

(11) **EP 0 699 942 B1**
(45) Veröffentlichungstag und Bekanntmachung des Hinweises auf die Patenterteilung: **04.06.1997**
(21) Anmeldenummer: 95112062.5
(22) Anmeldetag: 01.08.1995
(51) Int. Cl.: G03B 21/32

(54) **Verfahren zum Formen eines auf einer horizontal drehbaren Tellerscheibe aufliegenden Wickels eines vorzuführenden Filmbandes**
Method for forming a roll of film web to be projected lying on a horizontally rotatable disc
Méthode pour former un rouleau de bande de film à projeter reposant sur un disque tournant horizontalement

(30) Priorität: 01.09.1994 DE 4431195
(43) Veröffentlichungstag der Anmeldung: 06.03.1996
(73) Patentinhaber: KINOTON GmbH, D-82110 Germering (DE)
(72) Erfinder: Peschke, Günter, D-86415 Mering (DE); Büche, Hans Walter, D-82152 Krailling (DE); Wagner, Hans, D-80992 München (DE)
(74) Vertreter: Zoepke, Carl O.

(56) Entgegenhaltungen:
- EP-A- 0 270 308
- DE-B- 1 277 010
- DE-C- 4 030 286
- DE-C- 4 226 959
- US-A- 4 155 514

## Beschreibung

Die Erfindung bezieht sich auf ein Verfahren zum Formen eines auf einer horizontal drehbaren Tellerscheibe aufliegenden Wickels eines im Endlosbetrieb in einem Projektor vorzuführenden Filmbandes zu einer anfänglich sechseckförmigen Grundform, die durch an der äusseren Mantelfläche des Wickels angreifende, radial nach innen bewegbare Andrückelemente zu einer Kleeblattform aufgefächert wird sowie auf eine Vorrichtung zur Durchführung des Verfahrens.

Bei der Projektion von Kinofilm im Nonstop-Betrieb werden sogenannte Endlosfilmteller eingesetzt, die in der horizontalen Ebene umlaufbar angetrieben werden und den gesamten Bandvorrat für eine Filmvorführung tragen. Ein Umspulen des Films zwischen zwei Vorführungen erübrigt sich dadurch, daß das für die Projektion durch den Projektor geführte Filmband von der inneren Mantelfläche des inneren Wickels aus dem aufgelegten Vorrat herausgeführt und nach Durchgang durch den Projektor an den Außenumfang des Wickels wieder herangeführt und dort mit dem Filmende zusammengeklebt wird.

Form und Lage der sich vom inneren Umfang des äußeren Wickels ablösenden Filmschleife unterliegen Änderungen, wenn insbesondere infolge unzureichender Drehzahlregulierung der Ablösepunkt der Filmschleife in Umfangsrichtung wandert. Es fehlt dann an einem erforderlichen Ausgleich, damit pro Umdrehung der Tellerscheibe stets die gleiche Bandlänge aus dem Bandvorrat innen abgewickelt wie diesem außen zugeführt wird.

Aus der EP 0 270 308 A2 ist es bekannt, dem sich aufbauenden Bandwickel durch elastisch verformbare Leitlineale eine die Form eines Kleeblatts freilassende Innenkontour zu verleihen und auf dem Filmteller verteilt etwas erhöhte Reibungszonen vorzusehen.

Das eingangs genannte Verfahren ist aus der DE 40 30 286 C1 bekannt. Ein im Endlosbetrieb in einem Projektor vorzuführendes Filmband wird hierbei von der inneren Mantelfläche des Filmwickels unter Schleifenbildung zum Projektor hin abgezogen und im Anschluß an den Projektionsvorgang der äusseren Mantelfläche des Filmwickels wieder zugeführt. Dabei wird dem Filmwickel durch an dessen äußerer Mantelfläche gesteuert angreifende, periodisch radial nach innen bewegbare, kipphebelförmige Andrückelemente eine Kleeblattform verliehen.

Dadurch, daß der radial einwärts zu drückende Bandwickel ausschließlich von Führungsbolzen des Kipphebels vorgeschoben wird, überträgt sich der hiervon ausgehende Druck in Radialrichtung auf die unmittelbar dahinter liegenden Windungen des Bandwickels. Unter ungünstigen klimatischen Bedingungen oder bei bestimmten Filmsorten kann es vorkommen, daß die Windungen im Bereich der Ausbuchtungen zusammenbacken oder verkleben.

Aus der DE 42 26 959 C1 ist es bekannt, am Umfang der Filmtellerscheibe verteilt sechs in radialen Längsschlitzen geführte und gesteuerte Bolzen vorzusehen, die in bestimmter Reihenfolge an der äußeren Mantelfläche des Wickels angreifen und zur Bildung einzelner Windungspakete einen radial einwärts gerichteten Vortrieb auf den äußeren Wickel ausüben. Um vor der Projektion die Grundform eines sechseckigen Wikkels zu erhalten, wird das Filmband auf der Tellerscheibe unter Verwendung von sechs Kipphebeln aufgespult, die winkelversetzt zwischen den die Bolzen führenden Längsschlitzen radial ausgerichtet in Umfangsnähe der Tellerscheibe angeordnet sind. Die Kipphebel sind mit zunehmender Aufspulmenge des Filmbandes in Längs spalten der Tellerscheibe begrenzt verschiebbar und für den Rückholhub unter die Telleroberfläche versenkbar gelagert.

Es hat sich als nachteilig erwiesen, daß infolge unterschiedlicher Spannung des zum Aufspulen aufgelegten Filmbandes dessen Anlage an den Kipphebeln reibungsabhängig ist, mit der Folge, daß sich die Kipphebel unterschiedlich nach innen zu bewegen und die angestrebte Sechseckform nicht eingehalten oder zerstört wird. Hierdurch finden die nachfolgend aufzuspulenden Windungen keine exakten Anlagepunkte.

Der Erfindung liegt die Aufgabe zugrunde, das Aufspulen jeweils eines äußeren Windungspakets des vorzuführenden Filmbandes unter weitgehender Vermeidung von Reibungen zwischen den Windungen mechanisch straffer zu vollziehen und im weiteren Verlauf Vorschub und Auffächerung des Wickels zu einer Kleeblattform auf größere Angriffsflächen zu verteilen. Diese Aufgabe wird erfindungsgemäß mit den im Anspruch 1 und Anspruch 2 angegebenen Maßnahmen gelöst.

Dadurch, daß die straff gespannt aufgespulten Filmbandwindungen an ortsfest auf der Tellerscheibe verbleibenden Anschlagstiften zur Anlage kommen, verlieren die außen aufgespulten Pakete von Windungen bestimmter Länge nicht ihre Form, wenn sie unter gleichzeitiger Entspannung im Filmeinlauf für den weiteren Vorschub radial nach innen freigegeben werden.

Beim Vorschub und Auffächern des Wickels nach innen werden größere Flächen des Wickels erfaßt, wenn die Andrückelemente auch die Unterkanten des auf der Tellerscheibe aufliegenden Filmbandes untergreifen und fördern.

Zur Durchführung des Verfahrens sind in vorteilhafter Weise die vertikal bewegbaren Anschlagstifte und die für den weiteren Vorschub verwendeten Andrückelemente gemeinsam, aber zeitversetzt, über eigene Koppelstangen eines Zahnradgetriebes steuerbar. Dabei überlagert sich einer kurzzeitigen, durch Kipphebelsteuerung ausgelösten Abwärts- und Auftauchbewegung der Anschlagstifte eine vergleichsweise längere exzentergesteuerte komplexe Bewegung der Andrückelemente.

Weitere Einzelheiten der Erfindung ergeben sich aus den Merkmalen der Unteransprüche.

Ein in der Beschreibung näher erläutertes Ausführungsbeispiel der Erfindung ist in der Zeichnung wiedergegeben; es zeigt
- Fig. 1: eine schematisch gehaltene Draufsicht auf den Filmteller mit für Endlos-Vorführbetrieb aufgewickeltem und zu einem Kleeblatt vorgeformten Filmbandwickel einschließlich des Filmeinlaufs;
- Fig. 2: einen teilweisen Schnitt durch die Steuerung für einen der Anschlagstifte zum Aufspulen des ersten Windungspakets;
- Fig. 3: eine teilweise Ansicht des Filmtellers von unten mit Teilen der Steuerung für einen Anschlagstift;

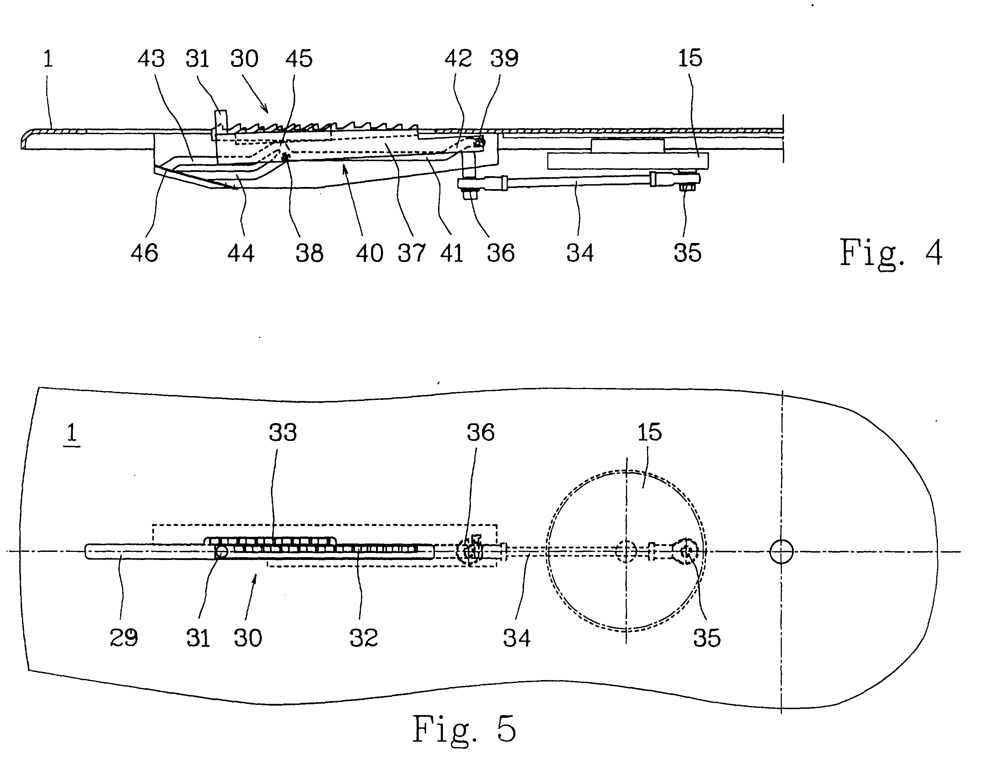

- Fig. 4: einen teilweisen Schnitt durch die Steuerung für eines der Andrückelemente mit Schieberstift und bewegbarer Zahnleiste;
- Fig. 5: eine Draufsicht auf einen Ausschnitt der Filmtellerscheibe mit Längsschlitz für den Durchgriff der Andrückelemente.

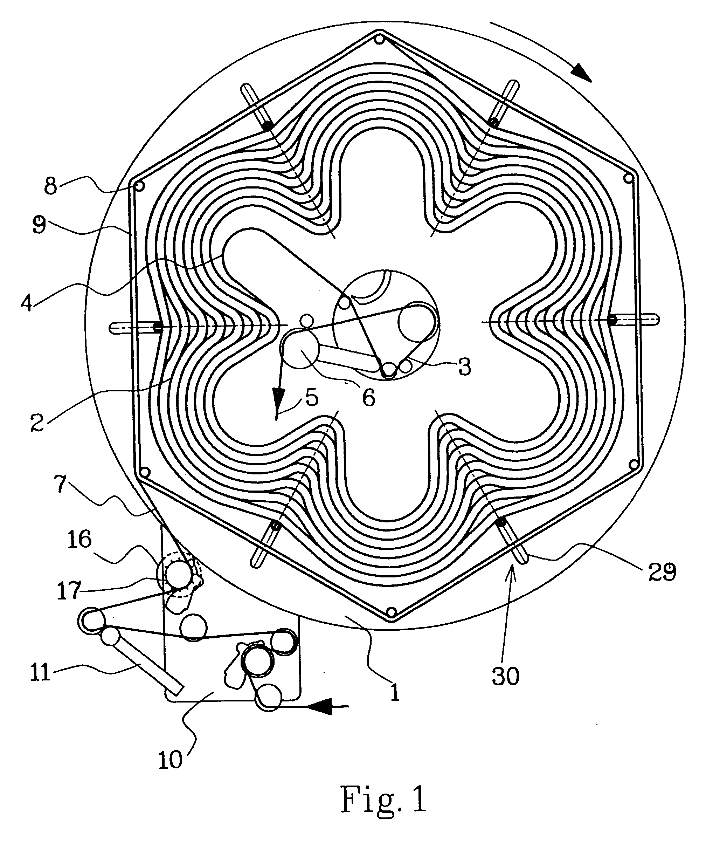

Wie Fig. 1 zeigt, besteht der auf einer horizontal umlaufbaren Filmtellerscheibe 1 aufgelegte Bandvorrat für eine Filmvorführung von beispielsweise zwei bis drei Stunden Dauer aus einem Außenwickel 2, der zu einem Kleeblatt vorgeformt und in dieser Form ständig aufrechterhalten wird, und einem Innenwickel 3. Der Übergang vom Außenwickel 2 zum Innenwickel 3 erfolgt über eine Schleife 4. Das zum Filmprojektor führende auslaufende Filmband 5 wird über eine feststehende Umlenkrolle 6 aus dem Innenwickel 3 herausgeführt.

Damit zu Beginn des Aufspulens eine möglichst exakt sechseckige Aufwickelstruktur des Außenwickels 2 entsteht und damit ein feststehender Anlagepunkt für das einlaufende Filmband 7 gewährleistet ist, sind gleichmäßig im Randbereich der Tellerscheibe 1 verteilt sechs in Bohrungen der Tellerscheibe periodisch versenkbare und wieder auftauchende Anschlagstifte 8 vorgesehen. Auf diese Anschlagstifte 8 wird bis zu einer bestimmten konstanten Länge des Filmbandes der einlaufende Film zu einem ersten Windungspaket 9 aufgespult. Infolge der auf der Tellerscheibe 1 unveränderlichen Lage der sechs Anschlagstifte 8 fügt sich beim Aufspulen Windung an Windung, ohne daß es im angrenzenden Wicklungsbereich zu gegenseitigen Verschiebungen des Filmbandes und damit verbundenen Reibungen zwischen den einzelnen Windungen kommt, die in Verbindung mit Staub den Film verkratzen würden.

Im Bereich des Filmeinlaufs ist auf einer Konsole 10 ein Regelarm 11 schwenkbar gelagert, der einen Schaltimpuls auslöst, sobald eine durch die Anzahl der Filmperforationslöcher bestimmte konstante Länge des Filmbandes zu dem anfänglichen Windungspaket 9 aufgespult worden ist. Dieser Schaltimpuls setzt einen zentralen Antrieb für ein Zahnradgetriebe in Gang, das aus sechs sternförmig verteilt an der Unterseite der Tellerscheibe 1 gelagerten Zahnrädern 15 besteht, die jeweils gegenläufig miteinander kämmen und von denen ein Zahnrad von einem den Zentralantrieb für das Zahnradgetriebe bildenden Motor angetrieben wird.

Gleichzeitig schaltet der vom Regelarm 11 ausgelöste Impuls einen als Wirbelstromläufer arbeitenden elektrischen Asynchron-Motor 16 ab, der im Betrieb auf eine Zahnrolle 17 für das einlaufende Filmband 7 ein in bezug auf deren Umlauf gegenläufiges Bremsmoment derart ausübt, daß die einzelnen Windungen beim Aufspulen des äußersten Windungspakets 9 verhältnismäßig straff gespannt werden. Beim Abschalten des Asynchron-Motors 16 wird diese Spannung weggenommen.

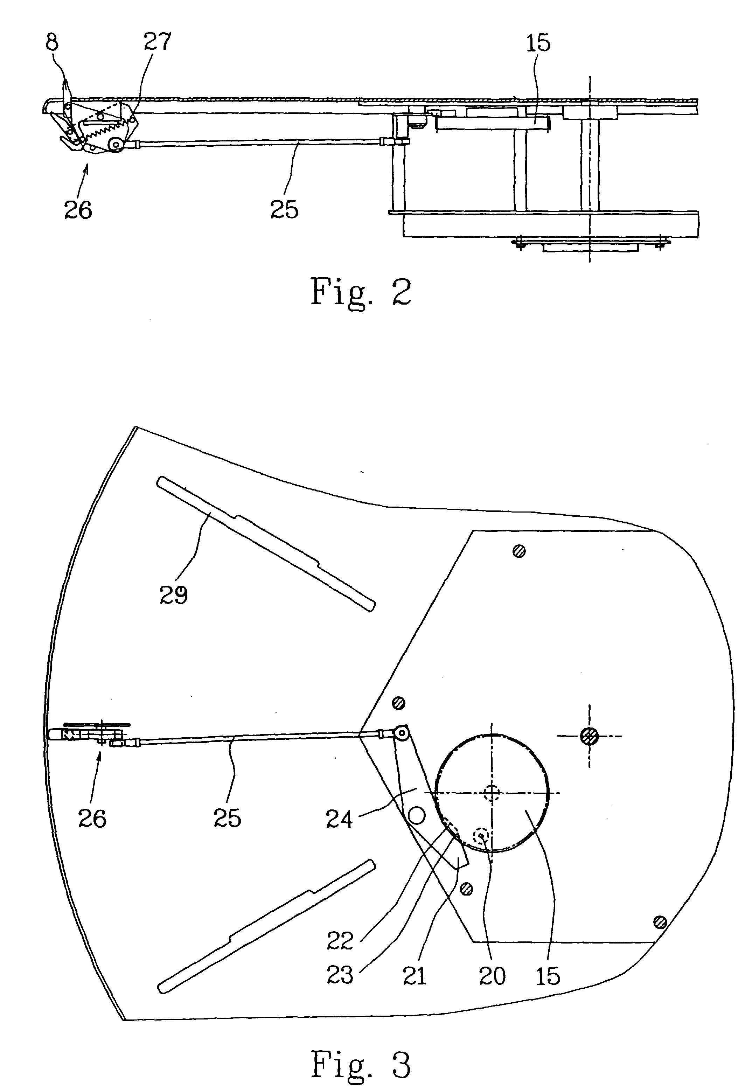

Wie Fig. 3 zeigt, trägt jedes Zahnrad 15 des Zahnradgetriebes exzentrisch an seiner Unterseite einen zapfenförmigen Nockenanschlag 20, der mit einem zweiarmigen, mittig gelagerten Kipphebel 21 zusammenwirkt. An seinem einen Ende ist dieser Kipphebel mit zwei Auflauframpen 22, 23 versehen, von denen jeweils die eine oder die andere entsprechend der Umlaufrichtung des Zahnrades 15 während eines Umlaufs kurzzeitig angefahren wird. Hierdurch verschwenkt der diese Auflauframpen tragende Hebelarm des Kipphebels 21 radial nach außen, wodurch der entgegengesetzte Hebelarm 24 radial nach innen verschwenkt.

An diesem bei Hebelbetätigung radial nach innen schwenkbaren Hebelarm 24 greift eine Koppelstange 25 an, die mit ihrem äußeren Ende über ein Winkelgetriebe 26 den zugeordneten Anschlagstift 8 entgegen der Wirkung einer Zugfeder 27 durch die in der Tellerscheibe 1 vorgesehene Bohrung vertikal nach unten zieht, wodurch dieser Stift unter die Oberfläche der Tellerscheibe abtaucht und das sechseckförmige Windungspaket 9 zum Vorschub radial nach innen freigibt.

Zu diesem Zweck werden kurz darauf sechs in radialen Längsschlitzen 29 verschiebbare Andrückelemente 30 betätigt, die jeweils aus einem vertikal angeordneten Schieberstift 31 und einer mit diesem diesem verbundenen, gesteuerten Zahnleiste 32 bestehen. Der Vorschub dieser Andrücklemente 30 bewirkt ein Auffächern der bereits freigegebenen Windungspakete zu einer Kleeblattform; er wird dadurch eingeleitet, daß die Schieberstifte 31 am radial äußeren Ende der Längsschlitze 29 an der Oberfläche der Tellerscheibe aufsteigen und an der äußeren Mantelfläche des Außenwickels 2, nämlich außen und mittig zwischen den zuvor freigegebenen sechs Ecken des anfänglichen Windungspakets 9 radial nach innen drückend angreifen. Im weiteren Verlauf dieser Vorschubbewegung taucht die mit jedem Schieberstift 31 verbundene gesteuerte Zahnleiste 32 durch den Längsschlitz 29 aus der Oberfläche der Tellerscheibe 1 etwas nach oben und untergreift die zuvor gebildeten Windungspakete an den auf dieser Oberfläche aufliegenden Filmbandkanten, um so die noch mehr oder weniger lagenweise zusammenhängenden Windungspakete in Richtung der inneren Ausbuchtungen der Kleeblattform aufzulockern und aufzufächern.

Am radial inneren Ende der Längsschlitze 29 tauchen die Andrückelemente 30 insgesamt wieder unter die Oberfläche der Tellerscheibe ab und vollführen den Rückholhub.

Diese Vorschub- und Rückholbewegung der Andrückelemente 30 erfolgt exzentergesteuert über jeweils eigene Koppelstangen 34, die jeweils mit ihrem einen Ende in Umfangsnähe jedes Zahnrades 15 an diesem über einen Kurbelzapfen 35 angelenkt und mit ihrem anderen, radial äußeren Ende über einen weiteren Kurbelzapfen 36 an eine Führungsstange 37 angeschlossen sind, welche den Schieberstift 31 und die gesteuerte Zahnleiste 32 trägt.

An der Führungsstange 37 sind auf horizontalem Abstand zwei seitlich horizontal vorstehende Führungsbolzen 38 und 39 vorgesehen, die in einer an der Unterseite der Tellerscheibe 1 angebrachten Kurvenbahn 40 gleitend eingreifen.

Die Kurvenbahn 40 besteht im wesentlichen aus vier Einzelabschnitten, nämlich einem horizontal verlaufenden, geradlinigen Abschnitt 41, einem am radial inneren Ende zur Ebene der Tellerscheibe 1 aufsteigenden Abschnitt 42 und zwei von einem Umkehrpunkt 45 aus radial nach außen, zunächst absteigend und anschließend horizontal und annähernd parallel zueinander verlaufenden Abschnitten 43 und 44, wobei der obere Abschnitt 43 am radial äußeren Ende nach außen leicht abfällt und offen ausläuft. Ebenso läuft in diesem Bereich der untere Abschnitt 44 offen aus. In der gemeinsamen Öffnungsebene werden diese Abschnitte 43, 44 durch eine auf Abstand hierzu eingespannte Blattfeder 46 abgedeckt.

Parallel zu jedem Längsschlitz 29 und an diesen unmittelbar angrenzend ist in die Oberfläche der Tellerscheibe 1 eine feststehende Zahnleiste 33 eingelassen. Die Zähne beider Zahnleisten 32 und 33 sind sägezahnartig geformt.

Bei einer Drehstellung eines der Zahnräder 15 zwischen den Totpunktlagen der zugehörigen Koppelstange 34 befindet sich der äußere Führungsbolzen 38 an der Führungsstange 37 entweder zur Ausführung des Förderhubs im oberen Abschnitt 43 der Kurvenbahn 40 oder für den Rückholhub im unteren Abschnitt 44. Der innere Führungsbolzen 39 befindet sich dann im horizontal geradlinig verlaufenden Abschnitt 41. Solange der äußere Führungsbolzen 38 im jeweils geradlinigen Bereich der Abschnitte 43 oder 44 läuft, vollführt die Führungsstange 37 zusammen mit Schieberstift 31 und gesteuerter Zahnleiste 32 eine reine Linearbewegung, die nach Auflaufen des Führungsbolzens 39 auf dem aufsteigenden Abschnitt 42 und des Führungsbolzens 38 auf dem parallel hierzu aufsteigenden Bereich des Abschnitts 43 in eine entsprechend schräg nach oben verlaufende Linearbewegung übergeht, bei der der Schieberstift 31 und die gesteuerte Zahnleiste 32 über die Telleroberfläche auftauchen und zugleich eine lineare Vorschubbewegung radial nach innen ausführen, bis die Koppelstange 34 ihre innere Totpunktlage erreicht hat und der Führungsbolzen 38 am Umkehrpunkt 45 nach unten einfällt. Da hierbei der Führungsbolzen 39 am oberen Ende des aufsteigenden Abschnitts 42 ausharrt, kippt die gesteuerte Zahnleiste 32 kurzzeitig um den Führungsbolzen 39 nach unten.

Ausgehend vom Rückholhub der Führungsstange, während dessen Schieberstift 31 und gesteuerte Zahnleiste 32 unterhalb der Telleroberfläche laufen, fährt der äußere Führungsbolzen 38 bei Erreichen des äußeren Endes des unteren Abschnitts 44 gegen die Blattfeder 46 an und wird von dieser in der äußeren Totpunktlage der Koppelstange 34 nach oben und in den oberen Abschnitt 43 gedrückt. Hierbei tauchen der Schieberstift 31 und kurz darauf die bewegliche Zahnleiste 32 aus der Oberfläche der Tellerscheibe 1 nach oben heraus. Die Zahnleiste 32 untergreift hierbei die in der feststehenden Zahnleiste 33 einrastend abgelegten Unterkanten des bereits vorgefächerten und auf der Oberfläche der Tellerscheibe aufliegenden Filmbandes und fördert diese Bereiche des Filmbandes radial ein Stück nach innen, um so die inneren Ausbuchtungen des Kleeblattes zu bilden und die für den Durchgang durch den Projektor exakt benötigte Wicklungslänge pro Umlauf hierin unterzubringen.

Bei Erreichen des Umkehrpunkts 45 in der Kurvenbahn 40 vollführt die Führungsstange 37 eine Kippbewegung, wobei der Schieberstift 31 zusammen mit dem inneren Ende der gesteuerten Zahnleiste 32 vor dem Abtauchen unter die Telleroberfläche für einen Moment über der Oberfläche verbleibt, bis durch weiteres Abgleiten beider Führungsbolzen 38, 39 in den abfallenden Bereichen im Abschnitt 41 und im unteren Abschnitt 44 die Linearbewegung in Richtung des Rückholhubes eingeleitet wird.

## Patentansprüche

1. Verfahren zum Formen eines auf einer horizontal drehbaren Tellerscheibe (1) aufliegenden Wickels (2) eines im Endlosbetrieb in einem Projektor vorzuführenden Filmbandes zu einer anfänglich sechseckförmigen Grundform, die durch an der äußeren Mantelfläche des Wikkels (2) angreifende, radial nach innen bewegbare Andrückelemente (30) zu einer Kleeblattform aufgefächert wird, dadurch gekennzeichnet, daß nach einem Aufspulen einer bestimmten konstanten Länge des Filmbandes auf sechs verteilt am Tellerscheibenrand auf- und abtauchbare Anschlagstifte (8) zu einem straff gespannten Windungspaket (9) die Anschlagstifte (8) bei gleichzeitiger Entspannung des Filmbandes im Einlauf senkrecht unter die Oberfläche der Tellerscheibe (1) abtauchen, woraufhin im Winkel zwischen den Anschlagstiften (8) die Andrückelemente (30) an der Oberfläche auftauchen, um das freigegebene Windungspaket durch Drücken an dessen äußerer Mantelfläche und gleichzeitigem Untergreifen an dessen aufliegenden Filmbandunterkanten radial einwärts nachzuschieben, während die Anschlagstifte (8) zum Aufspulen des nächsten Windungspakets (9) wieder aufgetaucht sind und das Filmband im Einlauf auf Zug gespannt worden ist.

2. Vorrichtung zur Durchführung des Verfahrens nach Anspruch 1 mit einer drehbaren Tellerscheibe (1) zum Aufspulen eines auf der Tellerscheibe aufliegenden Wickels (2) eines im Endlosbetrieb vorzuführenden Filmbandes, wobei mittels in radialen Längsschlitzen (29) der Tellerscheibe geführter und gesteuerter, radial nach innen bewegbarer, an der äußeren Mantelfläche des Wickels (2) angreifender Andrückelemente (30) dem Wickel (2) Kleeblattform verliehen wird, dadurch gekennzeichnet, daß am Tellerscheibenrand verteilte, aufund abtauchbare Anschlagstifte (8) zum Aufspulen eines anfänglichen Windungspakets (9) vorgesehen sind, wobei die Anschlagstifte (8) und die winkelversetzt zu diesen geführten Andrückelemente (30) gemeinsam, aber zeitversetzt, über eigene Koppelstangen (25, 34) von einem miteinander verzahnten Exzentergetriebe gesteuert sind, von dessen einzelnen Zahnrädern (15) aus die Koppelstange (34) für die Andrückelemente (30) über Kurbelzapfen (35) und die Koppelstangen (25) für die Anschlagstifte (8) über nockengesteuerte Kipphebel (21) bewegbar sind.

3. Vorrichtung nach Anspruch 2, dadurch gekennzeichnet, daß durch einen nach einer bestimmten Aufspullänge ausgelösten Schaltimpuls eines im Filmeinlauf schwenkbar gelagerten Regelarms (11) das an der Unterseite des Filmtellers (1) angeordnete Exzentergetriebe mit sechs paarweise miteinander kämmenden Zahnrädern (15) in Gang gesetzt und gleichzeitig ein das einlaufende Filmband (7) über eine Zahnrolle (17) auf Zug spannender Asynchron-Motor (16) abgeschaltet wird.

4. Vorrichtung nach Anspruch 2, dadurch gekennzeichnet, daß jedes Zahnrad (15) exzentrisch einen Nockenanschlag (20) trägt, der beim Umlauf des Zahnrades über eine Auflauframpe (22 bzw. 23) kurzzeitig einen Kipphebel (21) verschwenkt, wodurch die endseitig hieran angelenkte Koppelstange (25) über ein Winkelgetriebe (26) den Anschlagstift (8) senkrecht nach unten zieht.

5. Vorrichtung nach Anspruch 4, dadurch gekennzeichnet, daß der Kipphebel (21) zweiarmig ausgebildet und mittig gelagert ist.

6. Vorrichtung nach Anspruch 4, dadurch gekennzeichnet, daß für Links- oder Rechtsumlauf des Zahnrades (15) zwei gegensinnig ansteigende Auflauframpen (22, 23) an dem Kipphebel (21) vorgesehen sind.

7. Vorrichtung nach Anspruch 6, dadurch gekennzeichnet, daß die zwei Auflauframpen (22, 23) durch eine in Umfangsrichtung verlaufende Steuerfläche verbunden sind, deren Bogenlänge die Verweilzeit des Anschlagstiftes (8) unterhalb der Oberfläche der Tellerscheibe (1) bestimmt.

8. Vorrichtung nach Anspruch 2, dadurch gekennzeichnet, daß die Andrückelemente (30) jeweils aus einem vertikal angeordneten Schieberstift (31) und einer mit diesem verbundenen, gesteuerten Zahnleiste (32) bestehen und in radialen Längsschlitzen (29) der Filmteller-Oberfläche auftauchbar gesteuert sind.

9. Vorrichtung nach Anspruch 8, dadurch gekennzeichnet, daß der Schieberstift (31) und die gesteuerte Zahnleiste (32) an einer Führungsstange (37) befestigt sind, die durch Eingreifen über Führungsbolzen (38, 39) in einer feststehenden Kurvenbahn (40) abwechselnd in Linear- und Kippbewegungen steuerbar ist.

10. Vorrichtung nach Anspruch 9, dadurch gekennzeichnet, daß die Kurvenbahn (40) aus mehreren teilweise übereinander geradlinig und an- bzw. absteigend verlaufenden Abschnitten (41 bis 44) besteht.

11. Vorrichtung nach Anspruch 10, dadurch gekennzeichnet, daß die zwei übereinander verlaufenden Abschnitte (43, 44) am radial inneren Ende einen gemeinsamen Umkehrpunkt (45) für das Absenken der Führungsstange (37) zu Beginn des Rückholhubes aufweisen und am radial äußeren Ende offen auslaufen, wobei die gemeinsame Öffnungsebene durch eine Blattfeder (46) abdeckbar ist.

12. Vorrichtung nach Anspruch 11, dadurch gekennzeichnet, daß die Blattfeder (46) auf Abstand derart eingespannt ist, daß sie vom Führungsbolzen (38) nach Vollendung des Rückholhubes so weit elastisch durchgedrückt ist, daß sie den Führungsbolzen (38) zur Einleitung der linearen Vorschubbewegung in den oberen Abschnitt (43) der Kurvenbahn (40) einführen kann.

13. Vorrichtung nach Anspruch 9, dadurch gekennzeichnet, daß an der Führungsstange (37) auf Abstand zwei Führungsbolzen (38 und 39) seitlich abstehen, von denen der radial innere Führungsbolzen (39) auf dem geradlinig horizontal verlaufenden Abschnitt (41) eine hin- und hergehende Bewegung ausführt.

14. Vorrichtung nach Anspruch 13, dadurch gekennzeichnet, daß der radial innere Führungsbolzen (39) am inneren Ende auf einem zur Ebene der Tellerscheibe (1) aufsteigend gerichteten Abschnitt (42) geführt ist, wodurch die gesteuerte Zahnleiste (32) im Längsschlitz (29) an der Telleroberfläche auftaucht und ihren Arbeitshub beendet.

15. Vorrichtung nach Anspruch 14, dadurch gekennzeichnet, daß im Austrittsbereich der gesteuerten Zahnleiste (32) parallel und zum Längsschlitz (29) unmittelbar angrenzend an die Oberfläche der Tellerscheibe (1) eine feststehende Zahnleiste (33) eingelassen ist.

16. Vorrichtung nach Anspruch 15, dadurch gekennzeichnet, daß die Zahnleisten (32 bzw. 33) austauschbar sind und aus weichem, jedoch abriebfestem Kunststoff bestehen.

17. Vorrichtung nach Anspruch 16, dadurch gekennzeichnet, daß die Zahnleisten (32 bzw. 33) aus Polyurethan geformt sind.

## Claims

1. Method for forming a roll (2) of film web to be projected in continuous operation lying on a horizontally rotatable disc (1) in a basic form initially hexagonal by spreading out into clover-leaf form by means of pressing elements (30) attacking at the outer surface of the roll (2), movable radial inwardly, characterized in that after a certain constant length of the film band has been coiled on six trip pins (8) distributed at the edge of the disc (1) and arranged for rising up and disappearing at the disc surface to a tightened winding package (9), the trip pins (8) disappear under the surface of the disc (1) by simultaneous releasing of the film band at the feeding side whereupon in the angular section between the trip pins (8) the pressing elements (30) rise up at the surface to supply the released winding package radial inwardly by pressing at its outer peripheral area and simultaneously gripping under the lower edges of the lying film band, whereas the trip pins (8) are rised up again for coiling of the next winding package (9) and the film band is tightened at the feeding side.

2. Device for proceeding the method of claim 1, comprising a rotatable disc (1) for coiling a roll (2) of film web lying on the disc to be projected in continuous operation, wherein pressing elements (30) radial inwardly slidable and movable in radial longitudinal slots (29) of the disc act towards the outer peripheral area of the roll (2) to generate clover-leaf form to the roll (2), characterized in that distributed at the edge of the disc (1) trip pins (8) are arranged for rising up and disappearing to wind up an initial winding package (9), wherein the trip pins (8) and the pressing elements (30) arranged to said pins in angular relationship are controlled commonly but time shifted by proper coupling bars (25, 34) of an interengaging eccentric gear, individual wheels (15) of said gear control the coupling bar (34) for the pressing elements (30) via crankpins (35) and the coupling bars (25) for the trip pins (8) via cam-controlled rocker arms (21).

3. Device according to claim 2, characterized in that actuation of the eccentric gear arranged at the lower side of the disc (1) and comprising six intermeshing gear wheels (15) is initiated by a switching pulse of a controller arm (11) pivotally supported within the feeding zone of the film after a certain winding length, and that simultaneously an asynchronous motor (16) for tightening the entering film band (7) via a sprocket (17) is turned off.

4. Device according to claim 2, characterized in that each wheel (15) carries eccentrically a cam boss (20) pivoting in short time a rocker arm (21) when moving over a lifting flank (22 or 23, respectively) so that the coupling bar (25) pivotally fixed to the rocker arm draws the trip pins (8) via a miter gear (26) vertically downwards.

5. Device according to claim 4, characterized in that the rocker arm (21) is two-armed and supported in its center.

6. Device according to claim 4, characterized in that for rotation of the wheel (15) in clockwise or counter-clockwise direction two opposingly ascending lifting flanks (22, 23) are provided at the rocker arm (21).

7. Device according to claim 6, characterized in that the two lifting flanks (22, 23) are interconnected by a control surface extending in peripheral direction, the arc length of which defining the duration of the trip pin (8) below the surface of the disc (1).

8. Device according to claim 2, characterized in that the pressing elements (30) consist each of a vertically arranged slide rod (31) and a controlled toothed rack (32) connected with the rod, and that the pressing elements are controlled for rising up in radial longitudinal slots (29) on the surface of the disc.

9. Device according to claim 8, characterized in that the slide rod (31) and the controlled toothed rack (32) are fixed to a guide rod (37) which is steerable in reciprocating linear and tilting motions by mating a fixedly secured curved track (40) via guide bolts (38, 39).

10. Device according to claim 9, characterized in that the curved track (40) consists of several segments (41 to 44) extending partly in superposed linear and ascending or declining direction.

11. Device according to claim 10, characterized in that the two superposed segments (43, 44) have a common reversal point (45) at their radially inner end to cause disappearing of the guide rod (37) at the start of the return stroke, and extend in open radially outer ends, covered in their common aperture plane by a plate spring (46).

12. Device according to claim 11, characterized in that the plate spring (46) is clamped spaced out in such a manner that after completion of the return stroke it is resiliently forced through so far as it can introduce the guide bolt (38) into the lower segment (43) of the curved track (40) for initiating the linear feed motion.

13. Device according to claim 9, characterized in that two spaced guide bolts (38 and 39) laterally project from the guide rod (37) from which the radially inner guide bolt (39) perform a reciprocating motion at the horizontally extending linear segment (41).

14. Device according to claim 13, characterized in that the radially inner guide bolt (39) is guided at the inner end in a segment (42) ascending to the surface of the disc (1) so that the controlled toothed rack (32) rises up towards the surface of the disc in the longitudinal slot (29) finishing the expansion stroke.

15. Device according to claim 14, characterized in that a fixedly mounted toothed rack (32) is received in the exit zone of the controlled toothed rack (33) parallel to the longitudinal slot (29) and adjacent to the surface of the disc (1).

16. Device according to claim 15, characterized in that the toothed racks (32 or 33, respectively) are interchangeable, consisting of yielding, but non-abrasive synthetic material.

17. Device according to claim 16, characterized in that the toothed racks (32 or 33, respectively) are formed in polyurethane.

## Revendications

1. Procédé pour donner à un enroulement (2), reposant sur un disque (1) tournant horizontalement, d'une bande de film dont il faut faire la projection sans fin dans un appareil de projection, une forme de base initialement hexagonale, que l'on fait croître en l'enroulant en une forme polylobée par des éléments (30) de pression attaquant la surface latérale extérieure de l'enroulement (2) et pouvant être déplacés radialement vers l'intérieur, caractérisé en ce que après avoir bobiné une longueur constante déterminée de la bande de film sur six doigts (8) de butée répartis au bord du disque et pouvant être sortis et rentrés, en un paquet (9) d'enroulement tendu, on rentre les doigts (8) de butée tout en détendant la bande de film à l'entrée perpendiculairement sous la surface du disque (1), puis on sort à la surface les éléments (30) de pression dans l'angle entre les doigts (8) de butée, pour repousser radialement vers l'intérieur le paquet d'enroulement libéré en appuyant sur sa surface latérale extérieure et en prenant en même temps par le dessous le bord inférieur de la bande de film par lequel elle est appliquée, tandis que les doigts (8) de butée sont sortis de nouveau pour le bobinage du paquet suivant (9) d'enroulement et que la bande de film a été mise sous tension à l'entrée.

2. Dispositif pour la mise en oeuvre du procédé suivant la revendication 1, comportant un disque (1) pouvant tourner pour bobiner un enroulement (2), appliqué sur le disque, d'une bande de film dont il faut faire la projection sans fin, une forme polylobée étant donnée à l'enroulement (2) au moyen d'éléments (30) de pression, qui sont guidés et commandés dans des fentes radiales longitudinales (29) du disque, qui peuvent être déplacés radialement vers l'intérieur et qui attaquent la surface latérale extérieure de l'enroulement (2), caractérisé en ce qu'il est prévu des doigts (8) de butée répartis au bord du disque, pouvant être sortis et rentrés et destinés au bobinage d'un paquet (9) d'enroulement initial, les doigts (8) de butée et les éléments (30) de pression guidés avec un décalage angulaire par rapport à celles-ci étant commandés en commun mais avec un décalage temporel, par l'intermédiaire de propres barres (25, 34) de couplage par un engrenage ayant un excentrique denté, à partir des roues dentées (15) duquel la barre (34) de couplage pour les éléments (30) de pression peut être déplacée par l'intermédiaire de tourillons (35) de manivelle et les barres (25) de couplage pour les doigts (8) de butée peuvent être déplacées par l'intermédiaire de leviers (21) basculants commandés par ergots.

3. Dispositif suivant la revendication 2, caractérisé en ce que l'engrenage à excentrique monté sur le côté inférieur du disque (1) et comportant six roues dentées (15) engrenant l'une avec l'autre par paires est mis en marche par une impulsion de commande, déclenchée après une longueur de bobinage déterminée, d'un bras (11) de réglage monté basculant à l'entrée du film, et un moteur (16) asynchrone mettant sous tension la bande (7) de film arrivant par l'intermédiaire d'un rouleau denté (17) est arrêté en même temps.

4. Dispositif suivant la revendication 2, caractérisé en ce que chaque roue dentée (15) porte, excentrée, une butée (20) à ergot, qui fait basculer pendant peu de temps un levier (21) basculant lorsque la roue dentée tourne au-dessus d'une rampe (22 ou 23), ce qui fait que la barre (25) de couplage, qui est articulée à l'extrémité, tire perpendiculairement vers le bas le doigt (8) de butée par l'intermédiaire d'un engrenage (26) d'angle.

5. Dispositif suivant la revendication 4, caractérisé en ce que le levier (21) basculant a deux bras et est monté par son milieu.

6. Dispositif suivant la revendication 4, caractérisé en ce qu'il est prévu pour la rotation vers la gauche ou vers la droite de la roue dentée (15) deux rampes (22, 23) montant en sens contraire sur le levier basculant (21).

7. Dispositif suivant la revendication (6), caractérisé en ce que les deux rampes (22, 23) sont reliées par une surface de commande s'étendant dans le sens périphérique, la longueur d'arc de cette surface déterminant le temps de séjour du doigt (8) de butée en-dessous de la surface du disque (1).

8. Dispositif suivant la revendication 2, caractérisé en ce que les éléments (30) de pression sont constitués chacun d'un doigt (31) coulissant monté verticalement et d'une crémaillère (32) reliée à celui-ci et commandée, et les éléments (30) de pression peuvent être commandés de manière à sortir de la surface du disque dans des fentes longitudinales radiales (29).

9. Dispositif suivant la revendication 8, caractérisé en ce que le doigt (31) coulissant et la crémaillère (32) commandée sont fixées à une barre (37) de guidage, qui peut être commandée en alternance en mouvement linéaire et en mouvement basculant en pénétrant par l'intermédiaire de tourillons (38, 39) de guidage dans un chemin (40) curviligne fixe.

10. Dispositif suivant la revendication 9, caractérisé en ce que le chemin curviligne (40) est constitué de plusieurs tronçons (41 à 44) s'étendant de manière rectiligne en partie superposés et montant ou descendant.

11. Dispositif suivant la revendication 10, caractérisé en ce que les deux tronçons (43, 44) superposés comportent, à l'extrémité intérieure radiale, un point (45) de rebroussement commun pour l'abaissement de la barre (37) de guidage au début de la course de retour et se terminent à l'extrémité extérieure radiale en étant ouverts, le plan commun d'ouverture pouvant être recouvert par un ressort (46) à lames.

12. Dispositif suivant la revendication 11, caractérisé en ce que le ressort (48) à lames est encastré à distance, de sorte à être comprimé élastiquement par le tourillon (38) de guidage après l'accomplissement de la course de retour, à un point tel qu'il peut introduire le tourillon (38) de guidage dans le tronçon supérieur (43) du chemin curviligne (40) pour déclencher le mouvement d'avance linéaire.

13. Dispositif suivant la revendication 9, caractérisé en ce que deux tourillons (38 et 39) de guidage, dont le tourillon (39) de guidage intérieur radial exécute un mouvement de va-et-vient sur le tronçon (41) s'étendant rectilignement et horizontalement, dépassent latéralement de la barre (37) de guidage en étant à distance l'un de l'autre.

14. Dispositif suivant la revendication 13, caractérisé en ce que le tourillon (39) de guidage intérieur radial à l'extrémité intérieure est guidé sur un tronçon (42) montant vers le plan du disque (1), ce qui sort la crémaillère (32) commandée dans la fente (29) longitudinale à la surface du disque et met fin à sa course de travail.

15. Dispositif suivant la revendication 14, caractérisé en ce qu'une crémaillère (33) fixe est encastrée dans la zone de la sortie de la crémaillère (32) commandée parallèlement à celle-ci et en étant directement adjacente à la fente longitudinale (29) à la surface du disque (1).

16. Dispositif suivant la revendication 15, caractérisé en ce que les crémaillères (32 et 33) peuvent être échangées et sont en une matière plastique souple mais résistant à l'abrasion.

17. Dispositif suivant la revendication 16, caractérisé en ce que les crémaillères (32 et 33) sont en polyuréthanne.
